# EUROPÄISCHE PATENTSCHRIFT

(11) **EP 2 491 234 B1**
(45) Veröffentlichungstag und Bekanntmachung des Hinweises auf die Patenterteilung: **14.08.2013**
(21) Anmeldenummer: 10766006.0
(22) Anmeldetag: 04.10.2010
(51) Int. Cl.: F02B 37/18, F02B 37/22, F16K 1/20, F16K 11/052

(54) **TURBINE FÜR EINEN ABGASTURBOLADER, ABGASTURBOLADER, KRAFTFAHRZEUG UND VERFAHREN ZUM BETREIBEN EINES ABGASTURBOLADERS**
TURBINE FOR TURBOCHARGER, TURBOCHARGER, VEHICLE AND METHOD FOR OPERATING A TURBOCHARGER
TURBINE POUR TURBOCOMPRESSEUR, TURBOCOMPRESSEUR, VEHICULE, ET PROCÉDÉ D'OPERATION D'UN TURBOCOMPRESSEUR

(30) Priorität: 20.10.2009 DE 102009049993
(43) Veröffentlichungstag der Anmeldung: 29.08.2012
(73) Patentinhaber: Continental Automotive GmbH, 30165 Hannover (DE)
(72) Erfinder: BÖNING, Ralf, 67829 Reiffelbach (DE); HERFURTH, Roland, 93051 Regensburg (DE); KOCH, Achim, 93105 Tegernheim (DE); SPARRER, Christoph, 93053 Regensburg (DE)
(74) Vertreter: Waldmann, Georg Alexander
(86) Internationale Anmeldenummer: PCT/EP2010/064721
(87) Internationale Veröffentlichungsnummer: WO 2011/047949

(56) Entgegenhaltungen:
- EP-A1- 0 702 175
- EP-A2- 1 939 427
- WO-A1-03/044327
- DE-A1- 19 853 391
- GB-A- 2 151 700

## Beschreibung

Die vorliegende Erfindung bezieht sich auf eine Turbine für einen Abgasturbolader, einen Abgasturbolader, ein Kraftfahrzeug und ein Verfahren zum Betreiben eines solchen Abgasturboladers.

Die DE 10 2004 041 166 A1 beschreibt den bekannten Aufbau eines Abgasturboladers für ein Kraftfahrzeug, der im Wesentlichen aus einer Radialturbine und einem im Ansaugtrakt des Motors angeordneten Radialverdichter, der über eine Turboladerwelle drehfest mit dem Turbinenrad der Radialturbine gekoppelt ist, besteht. Der Abgasstrom, der eine hohe kinetische und thermische Energie aufweist, treibt im Betrieb das Turbinenrad an, welches über die Kopplung mit der Turboladerwelle das Verdichterrad in Rotation versetzt. Der Radialverdichter saugt Luft an und verdichtet diese, wodurch im Ansaugtrakt des Motors eine entsprechend größerer Frischluftdruck und damit mehr Sauerstoff zur Verfügung steht als bei einem herkömmlichen Saugmotor. Damit erhöht sich der Motor-Mitteldruck und somit das Motor-Drehmoment, was zu einer höheren Leistungsabgabe des Motors führt.

Die Emissionen, die ein Verbrennungsmotor in einem Kraftfahrzeug produziert, werden anhand einer fest definierten Vorgehensweise gemessen. Hierzu wird ein bestimmter Fahrzyklus (Neuer Europäischer Fahrzyklus - NEFZ) auf einem Rollenprüfstand durchfahren und die dabei entstehenden Abgase werden am Auspuff des Verbrennungsmotors, beispielsweise in einem Sammelbehälter in Form eines Kunststoffbeutels, gesammelt. Nach dem Durchfahren des Fahrzyklus darf in dem gesammelten Abgasvolumen eine vorgegebene Menge an Kohlenmonoxid, Kohlenwasserstoffen und Stickoxiden nicht überschritten werden. Als eine Randbedingung bei diesem Messvorgang ist beispielsweise zu beachten, dass der Verbrennungsmotor unmittelbar vor dem Messvorgang nicht im Betrieb sein darf, d.h. der Fahrzyklus wird mit einem kalten Verbrennungsmotor gestartet. Im normalen Fahrbetrieb, d.h. bei einem betriebswarmen Katalysator, produziert der Verbrennungsmotor praktisch keine der zuvor aufgeführten Emissionen. Diese werden im Katalysator konvertiert. Der Katalysator arbeitet in effektiver Weise allerdings erst ab einer bestimmten Betriebstemperatur. Vor Erreichen dieser Temperatur gelangen die Schadstoffe im den Sammelbehälter am Auspuff. Je früher der Katalysator seine Betriebstemperatur erreicht, desto früher werden diese Schadstoffe katalysiert und desto weniger Schadstoffe werden von dem Verbrennungsmotor in dem NEFZ-Test produziert. Um ein möglichst schnelles Erreichen der Betriebstemperatur des Katalysators zu gewährleisten, ist dieser daher bevorzugt motornah angeordnet, vorzugsweise direkt hinter dem Abgaskrümmer.

Beim Einsatz eines Abgasturboladers ist dieses verbrennungsmotornahe Montieren des Katalysators nicht mehr möglich, da hier die Radialturbine des Abgasturboladers zwischen dem Verbrennungsmotor und dem Katalysator eingebaut wird. Durch die konstruktiv bedingten großen Oberflächen der Turbinenspirale und des Turbinenrades sowie die erforderlichen längeren Rohrleitungen verliert das Abgas beim Durchströmen des Turbinengehäuses sowohl an Wärme als auch an kinetischer Energie. Beim Einsatz eines so genannten Wastegate-Ventils während der Startphase, welches einen Teil der Abgase an der Turbine vorbei leitet, kann der zuvor beschriebene Effekt zwar verringert werden, allerdings nimmt auch beim Einsatz eines solchen Wastegate-Ventils ein Teil des Abgasmassenstroms naturgemäß den Weg über die Turbine. Hierdurch verlängert sich die Zeit, bis zu der der Katalysator seine erforderliche Betriebstemperatur erreicht hat. Dadurch werden im NEFZ-Test im Vergleich zu einem vergleichbaren Verbrennungsmotor ohne Abgasturbolader mehr Schadstoffe nachgewiesen.

Dies gilt es verständlicherweise zu vermeiden.

Aus der EP 1 939 427 A2 ist ein Abgasturbolader bekannt, welcher ein Turbinengehäuse aufweist. In diesem sind ein Bypasskanal und mehrere Zuströmkanäle vorgesehen. Des Weiteren ist im Turbinengehäuse ein Walzendrehschieber angeordnet. In einer ersten Drehposition des Walzendrehschiebers sind der Bypasskanal geöffnet und alle Zuströmkanäle geschlossen. In einer zweiten Drehposition des Walzendrehschiebers ist ein erster Zuströmkanal geöffnet, während der Bypasskanal und alle weiteren Zuströmkanäle geschlossen sind. In einer dritten Drehposition des Walzendrehschiebers sind zumindest zwei Zuströmkanäle geöffnet und der Bypasskanal geschlossen. In einer vierten Drehposition sind zumindest zwei Zuströmkanäle geöffnet und der Bypasskanal teilgeöffnet.

Aus der WO 03/044 327 A1 ist ebenfalls ein Abgasturbolader bekannt, welcher ein Turbinengehäuse aufweist. In diesem sind zumindest ein erster und ein zweiter Spiralkanal, ein Aufwärts-Gehäuseaustritt und ein in verschiedene Drehpositionen drehbares Steuerventil vorgesehen. In einer ersten Drehposition ist keiner der Spiralkanäle blockiert, wohingegen der Aufwärts-Gehäuseaustritt blockiert ist. In einer zweiten Drehposition sind zumindest ein Spiralkanal und der Aufwärts-Gehäuseaustritt blockiert. In einer dritten Drehposition sind weder die Spiralkanäle noch der Aufwärts-Gehäuseaustritt blockiert.

Der vorliegenden Erfindung liegt die Aufgabe zugrunde, eine verbesserte Turbine für einen Abgasturbolader zur Verfügung zu stellen.

Diese Aufgabe wird erfindungsgemäß durch eine Turbine mit den Merkmalen des Patentanspruchs 1 und/oder durch einen Abgasturbolader mit den Merkmalen des Patentanspruchs 9 und/oder ein Kraftfahrzeug mit den Merkmalen des Patentanspruchs 10 und/oder durch ein Verfahren mit den Merkmalen des Patentanspruchs 11 gelöst.

### Demgemäß ist vorgesehen:

Eine Turbine für einen Abgasturbolader, insbesondere für ein Kraftfahrzeug, mit einer Turbinenklappe, welche eine die Turbine durchströmenden Abgasmenge steuert, mit einem Wastegate-Ventil, welches Abgas an der Turbine vorbeileitet und mit einer Wastegate-Klappe, welche eine das Wastegate-Ventil durchströmende Abgasmenge steuert.

Ein Abgasturbolader, insbesondere für ein Kraftfahrzeug, mit einer erfindungsgemäßen Turbine, der aufweist: ein in einem Turbinengehäuse angeordnetes Turbinenrad, einen Verdichter mit einem Verdichtergehäuse, ein in dem Verdichtergehäuse angeordnetes Verdichterrad und eine Turboladerwelle, welche das Verdichterrad mit dem Turbinenrad drehfest verbindet.

Ein Kraftfahrzeug mit einem solchen Abgasturbolader.

Ein Verfahren zum Betreiben eines solchen Abgasturboladers, der eine erfindungsgemäße Turbine aufweist, mit einem ersten Betriebsmodus, bei dem die Turbinenklappe vollständig geschlossen ist und bei dem die Wastegate-Klappe vollständig geöffnet ist, wodurch die gesamte Abgasmenge durch das Wastegate-Ventil strömt.

Die der vorliegenden Erfindung zugrunde liegende Idee besteht nun unter anderem darin, die Turbine des Abgasturboladers während der Startphase eines Verbrennungsmotors vollständig zu verschließen. Dies wird über das Zusammenspiel der Wastegate-Klappe und der Turbinenklappe realisiert. Dadurch wird während der Startphase des Verbrennungsmotors erreicht, dass das gesamte Abgas um die Turbine herum durch das Wastegate-Ventil geleitet wird und nicht beim Durchströmen der Turbine Wärme verliert. Mit der erfindungsgemäßen Turbine ist es somit möglich die für das effiziente Arbeiten des Katalysators erforderliche Betriebstemperatur sehr schnell zu erreichen.

Gemäß der vorliegenden Erfindung weist die Turbine ein Turbinengehäuse auf, wobei das Wastegate-Ventil als Durchbruch in dem Turbinengehäuse vorgesehen ist und wobei die Turbinenklappe und die Wastegate-Klappe in dem Turbinengehäuse angeordnet sind. Hierdurch ist es möglich, die erfindungsgemäße Turbine kompakt zu gestalten, wodurch der Platzbedarf und das Gewicht der erfindungsgemäßen Turbine reduziert werden.

Des Weiteren sind bei der vorliegenden Erfindung die Turbinenklappe und die Wastegate-Klappe auf einer gemeinsamen Welle, insbesondere einer Wastegate-Spindel, angeordnet und mit dieser drehfest verbunden. Hierdurch ist es möglich, sowohl die Turbinenklappe als auch die Wastegate-Klappe gemeinsam anzusteuern, wodurch auf ein zusätzliches Stellmittel für die Turbinenklappe verzichtet werden kann. Hierdurch reduzieren sich die Anzahl der Bauteile, der Bauraum und das Gewicht der erfindungsgemäßen Turbine, wodurch die Produktionskosten der Turbine reduziert werden und der Anwendungsbereich aufgrund des verringerten Gewichts und des reduzierten Bauraumbedarfs signifikant vergrößert wird.

Vorteilhafte Ausgestaltungen und Weiterbildungen der vorliegenden Erfindung ergeben sich aus den weiteren Unteransprüchen und aus der Beschreibung in Zusammenschau mit den Figuren der Zeichnung.

In einer typischen Ausgestaltung der vorliegenden Erfindung ist die Turbinenklappe an einem Turbinenauslass angeordnet. Durch diese Anordnung wird gewährleistet, dass der in die Turbine strömende Abgasmassenstrom nicht beim Eintreten in die Turbine durch die Turbinenklappe behindert wird. Hierdurch kann eine Verschlechterung des Wirkungsgrads vermieden werden.

In einer besonders bevorzugten Ausgestaltung der vorliegenden Erfindung weisen die Turbinenklappe und/oder die Wastegate-Klappe abgerundete Ventilkörper auf. Hierdurch wird eine zuverlässige Abdichtung des Turbinenauslasses bzw. des Wastegate-Ventils gewährleistet und Abgasleckagen werden minimiert.

In einer weiteren bevorzugten Ausgestaltung der vorliegenden Erfindung ist ein Stellmittel zur Drehung der Welle vorgesehen. Das Stellmittel gewährleistet eine zuverlässige Positionierung der Welle in der gewünschten Position, hierdurch kann der gewünschte Öffnungsgrad der Turbine bzw. des Wastegate-Ventils eingestellt und damit die Funktionalität der Turbine gewährleistet werden.

In einer ebenso bevorzugten Ausgestaltung der vorliegenden Erfindung sind die Turbinenklappe und die Wastegate-Klappe in einer Längsrichtung und einer Umfangsrichtung der Welle versetzt zueinander angeordnet. Hierdurch wird bei definierten Winkelpositionen der Welle gewährleistet, dass der Turbinenauslass vollständig geschlossen ist, während das Wastegate-Ventil vollständig geöffnet ist, bzw. dass der Turbinenauslass vollständig geöffnet ist, während das Wastegate-Ventil vollständig geschlossen ist.

In einer weiteren bevorzugten Ausgestaltung der vorliegenden Erfindung ist die Welle in eine erste Position drehbar, in welcher der Turbinenauslass vollständig geschlossen ist und in welcher das Wastegate-Ventil vollständig geöffnet ist. Hierdurch wird gewährleistet, dass das gesamte Abgas durch das Wastegate-Ventil strömt, wodurch der Katalysator eines Verbrennungsmotors sehr schnell seine Betriebstemperatur erreicht. Hierdurch wird beim Durchfahren eines Abgas-Testzyklus gewährleistet, dass möglichst wenig Schadstoffe emittiert werden.

In einer ebenso bevorzugten Ausgestaltung der vorliegenden Erfindung ist die Welle in eine zweite Position drehbar, in welcher der Turbinenauslass zumindest abschnittsweise geöffnet ist und in welcher das Wastegate-Ventil ebenfalls zumindest abschnittsweise geöffnet ist. Hierdurch wird beispielsweise bei einem Volllastbetrieb des Verbrennungsmotors, also bei hohen Drehzahlen gewährleistet, dass nicht die gesamte Abgasmenge durch die Turbine strömt, wodurch die Drehzahl der Turbine zu hoch ansteigen würde.

In einer ebenso bevorzugten Ausgestaltung der vorliegenden Erfindung ist die Welle in eine Endposition drehbar, in welcher der Turbinenauslass vollständig geöffnet ist und in welcher das Wastegate-Ventil vollständig geschlossen ist, wobei die Wastegate-Klappe zur Verhinderung von Abgasleckagen in der Endposition gegen ein Ventilsitz des Wastegate-ventils gedrückt ist. Hierdurch wird zuverlässig verhindert, dass Abgas, beispielsweise bei Volllastbetrieb des Verbrennungsmotors bei niedrigen Drehzahlen durch das Wastegate-Ventil strömt. Hierdurch steht die erforderliche Turbinenleistung bereits bei niedrigen Drehzahlen und Volllast des Verbrennungsmotors zur Verfügung. Ferner wird beispielsweise das Beschleunigungsverhalten eines Kraftfahrzeuges mit einem derartigen Verbrennungsmotor unter weitgehender Vermeidung des so genannten "Turbolochs" signifikant verbessert.

In einer typischen Ausgestaltung der vorliegenden Erfindung ist ein zweiter Betriebsmodus vorgesehen, bei dem die Turbinenklappe und die Wastegate-Klappe zumindest abschnittsweise geöffnet sind, wodurch die Abgasmenge teilweise durch die Turbine und teilweise durch das Wastegate-Ventil strömt. Hierdurch wird, wie bereits zuvor erläutert, beispielsweise bei einem Volllastbetrieb des Verbrennungsmotors gewährleistet, dass nicht die gesamte Abgasmenge durch die Turbine strömt, wodurch die Drehzahl der Turbine unerwünschter Weise zu hoch ansteigen würde.

In einer weiteren bevorzugten Ausgestaltung der vorliegenden Erfindung ist ein dritter Betriebsmodus vorgesehen, bei dem die Turbinenklappe vollständig geöffnet ist und bei dem die Wastegate-Klappe vollständig geschlossen ist, wodurch die gesamte Abgasmenge durch die Turbine strömt. Hierdurch wird zuverlässig verhindert, dass Abgas, beispielsweise bei Volllastbetrieb des Verbrennungsmotors bei niedrigen Drehzahlen durch das Wastegate-Ventil strömt. Hierdurch steht die erforderliche Turbinenleistung bereits bei niedrigen Drehzahlen und Volllast des Verbrennungsmotors zur Verfügung. Hierdurch wird beispielsweise das Beschleunigungsverhalten eines Kraftfahrzeuges mit einem derartigen Verbrennungsmotor unter weitgehender Vermeidung des "Turbolochs" signifikant verbessert.

Die obigen Ausgestaltungen lassen sich - sofern sinnvoll - auf beliebige Weise miteinander kombinieren.

Die vorliegende Erfindung wird nachfolgend anhand der in den schematischen Figuren der Zeichnung angegebenen Ausführungsbeispiele näher erläutert. Es zeigen dabei:
- Fig. 1: eine Schnittdarstellung durch eine bevorzugte Ausgestaltung einer erfindungsgemäße Turbine in einem ersten Betriebsmodus;
- Fig. 2: eine Schnittdarstellung durch die Turbine in Fig. 1 in einem zweiten Betriebsmodus;
- Fig. 3: eine Schnittdarstellung durch die Turbine in Fig. 1 in einem dritten Betriebsmodus;
- Fig. 4: eine Aufsicht auf eine bevorzugte Ausgestaltung einer Wastegate-Spindel der Turbine gemäß Fig. 1;
- Fig. 5: eine Darstellung eines Öffnungsgrades eines Turbinenauslasses und eines Wastegate-Ventils in Abhängigkeit von einem Drehwinkel der Wastegate-Spindel gemäß Fig. 4; und
- Fig. 6: eine Aufsicht auf eine bevorzugte Ausführungsform eines erfindungsgemäßen Abgasturboladers mit einer Turbine gemäß Fig. 1.

In den Figuren der Zeichnung sind - sofern nichts Anderes ausgeführt ist - gleiche Bauteile, Elemente und Merkmale mit denselben Bezugszeichen versehen worden.

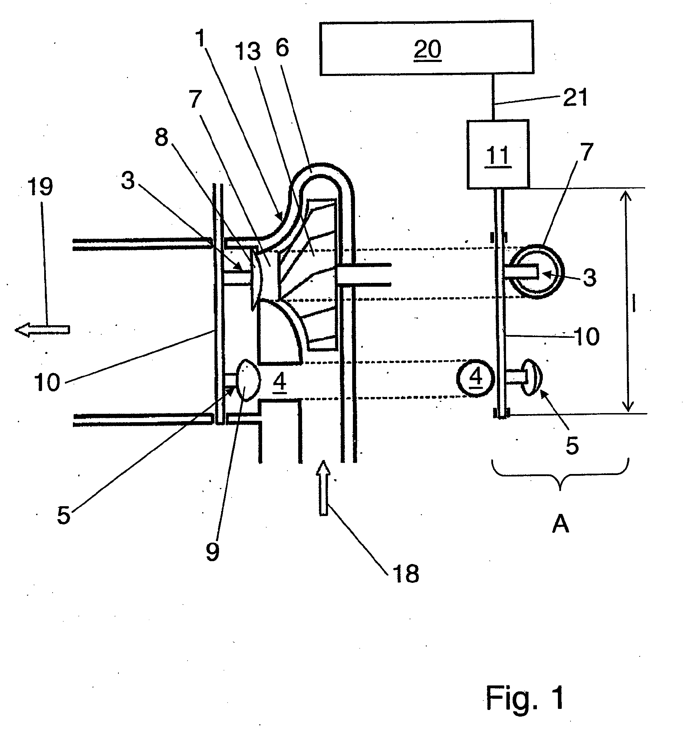

Fig. 1 zeigt eine Schnittdarstellung durch eine bevorzugte Ausgestaltung einer erfindungsgemäßen Turbine in einem ersten Betriebsmodus.

Fig. 1 zeigt zunächst eine Turbine 1 eines Abgasturboladers mit einem Turbinengehäuse 6, einem in dem Turbinengehäuse 6 angeordneten Turbinenrad 13, einem Turbinenauslass 7 und einer Turbinenklappe 3 mit einem Ventilkörper 8. Das Turbinengehäuse 6 weist weiterhin ein Wastegate-Ventil 4, welches bevorzugt als Durchbruch in dem Turbinengehäuse 6 ausgebildet ist, auf. Die Turbine 1 weist weiterhin eine Welle 10, auf welcher die Turbinenklappe 3 und eine Wastegate-Klappe 5 mit einem Ventilkörper 9 angeordnet sind. Die Ventilkörper 8, 9 weisen bevorzugt eine abgerundete Form auf, welche komplementär ausgebildete Ventilsitze an dem Turbinenauslass 7 und dem Wastegate-Ventil 4 in einem geschlossenen Zustand des Turbinenauslasses 7 oder des Wastegate-Ventils 4 leckagefrei abdichtet. Die in einem Abgasstrom 19 zu einem Katalysator angeordnete Welle 10 wird auch als Wastegate-Spindel bezeichnet. Die Welle 10 ist bevorzugt in dem Turbinengehäuse 6 drehbar gelagert, beispielsweise mittels hitzebeständiger Gleitlagerstellen. Die Welle 10 weist bevorzugt zwei voneinander beabstandete Lagerstellen in dem Turbinengehäuse 6 auf.

Die Fig. 1 zeigt weiterhin auf der rechten Seite die Welle 10 in einer Aufsicht auf das Wastegate-Ventil 4 und den Turbinenauslass 7. Die Welle 10 ist mit einem Stellmittel 11 verbunden, welches über eine Datenleitung oder Steuerleitung 21 mit einer Motorsteuerung 20 verbunden ist. Das stellmittel 11 ist bevorzugt als elektrischer oder pneumatischer Aktor ausgebildet. Das Stellmittel 11 versetzt die Welle 10 entweder direkt, über ein Getriebe oder über ein Gestänge in eine Drehbewegung. Ein gewünschter Drehwinkel der Welle 10 ist dabei über die Motorsteuerung 20 vorgebbar. Die Turbinenklappe 3 und die Wastegate-Klappe 5 sind bevorzugt über einen Stoff-, Form-, oder Kraftschluss verdrehfest auf der Welle 10 angebracht. Die Turbinenklappe 3 und die Wastegate-Klappe 5 sind über die Länge 1 der Welle 10 versetzt angeordnet. Weiterhin sind die Turbinenklappe 3 und die Wastegate-Klappe 5 auch bezüglich des Umfangs der Welle 10 versetzt angeordnet.

Die Turbinenklappe 3 ist bevorzugt am Turbinenauslass 7 angeordnet, da die Wastegate-Spindel 10 zur Verstellung der Wastegate-Klappe 5 üblicherweise bereits auf der Seite des Turbinenauslasses 7 vorhanden ist. Somit ist zur Ansteuerung der Turbinenklappe 3 kein zusätzliches Stellmittel 11 erforderlich, das heißt, das zur Bewegung der Welle 10 bereits vorhandene Stellmittel 11 kann ebenfalls zur Verstellung der Turbinenklappe 3 verwendet werden. Erforderlichenfalls ist das Stellmittel 11 etwas größer zu dimensionieren.

Die Funktion der erfindungsgemäßen Turbine 1 in einem ersten Betriebsmodus wird im Folgenden beschrieben:

Das bevorzugt als Durchbruch in dem Turbinengehäuse 6 vorgesehene Wastegate-Ventil 4 verbindet einen Abgasstrom 18 vom Verbrennungsmotor mit dem Abgasstrom 19 zum Katalysator.

In dem ersten Betriebsmodus der erfindungsgemäßen Turbine 1 befindet sich die Welle 10 in einer ersten Position A. Die Welle 10 wird durch das Stellmittel 11 in die Position A gebracht. In diesem ersten Betriebsmodus ist der Turbinenausgang 7 durch die Turbinenklappe 3 vollständig verschlossen und das Wastegate-Ventil 4 ist vollständig geöffnet, d.h. die Wastegate-Klappe 5 ist vollständig aus einem das Wastegate-Ventil 4 durchströmenden Abgasstrom herausgeschwenkt. Das heißt, der gesamte Abgasstrom 18, 19 eines Verbrennungsmotors wird um die Turbine 1 herum durch das Wastegate-Ventil 4 zum Katalysator geleitet.

Der erste Betriebsmodus wird bevorzugt in einer Startphase des Verbrennungsmotors eingestellt. Dadurch, dass die gesamte Abgasmenge um die Turbine 1 herumgeleitet wird, wird gewährleistet, dass der Katalysator des Verbrennungsmotors möglichst schnell seine erforderliche Betriebstemperatur erreicht.

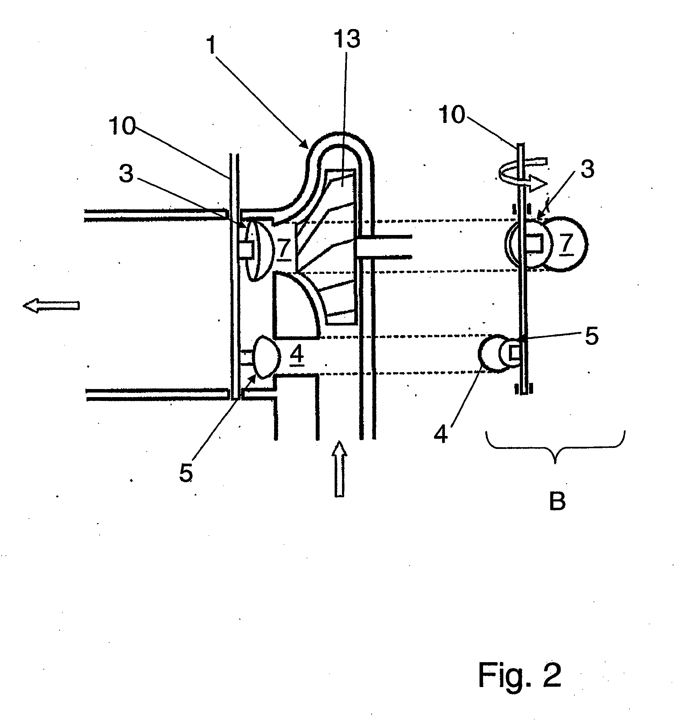

Fig. 2 zeigt eine Schnittdarstellung durch die Turbine gemäß Fig. 1 in einem zweiten Betriebsmodus.

Fig. 2 zeigt zunächst die Turbine 1 mit dem Turbinenrad 13 und der Wastegate-Spindel 10 mit der Turbinenklappe 3 und der Wastegate-Klappe 5. Weiterhin zeigt Fig. 2 den Turbinenauslass 7 und das Wastegate-Ventil 4. Zur vereinfachten Darstellung sind in Fig. 2 die Motorsteuerung und das Stellmittel nicht dargestellt. Der gewünschte Drehwinkel und damit die Position der Welle 10 ist jedoch wieder über das Stellmittel anfahrbar.

Die Funktion der erfindungsgemäßen Turbine 1 in einem zweiten Betriebsmodus wird im Folgenden beschrieben:

In dem zweiten Betriebsmodus befindet sich die Wastegate-Spindel 10 in einer zweiten Position B. In der Position B sind sowohl der Turbinenauslass 7 als auch das Wastegate-Ventil 4 zumindest teilweise geöffnet. Unter teilweise geöffnet ist hierbei zu verstehen, dass die Turbinen-Klappe 3 bzw. die Wastegate-Klappe 5 zumindest teilweise in einen den Turbinenauslass 7 bzw. das Wastegate-Ventil 4 durchströmenden Abgasstrom geschwenkt sind. Der zweite Betriebsmodus umfasst auch Positionen der Wastegate-Spindel 10, bei welchen die Turbinen-Klappe 3 und/oder die Wastegate-Klappe 5 vollständig aus dem jeweiligen Abgasstrom herausgeschwenkt sind. Das heißt, das Abgas wird zum Teil in der Turbine 1 zur Erzeugung von Rotationsenergie expandiert und strömt zum Teil um die Turbine 1 herum durch das Wastegate-Ventil 4 in einen Auspuff des Verbrennungsmotors.

Dieser zweite Betriebsmodus ist beispielsweise bei einem Volllastbetrieb des Verbrennungsmotors bei hohen Motordrehzahlen erforderlich, beispielsweise bei der schnellen Fahrt eines Kraftfahrzeugs mit hoher konstanter Geschwindigkeit. In diesem Betriebsmodus verhindert das Wastegate-Ventil 4 ein zu hohes Ansteigen der Drehzahl des Turbinenrades 13, wodurch beispielsweise das Turbinenrad des Abgasturboladers beschädigt werden könnte oder der Verbrennungsmotor durch Überladung Schaden nimmt.

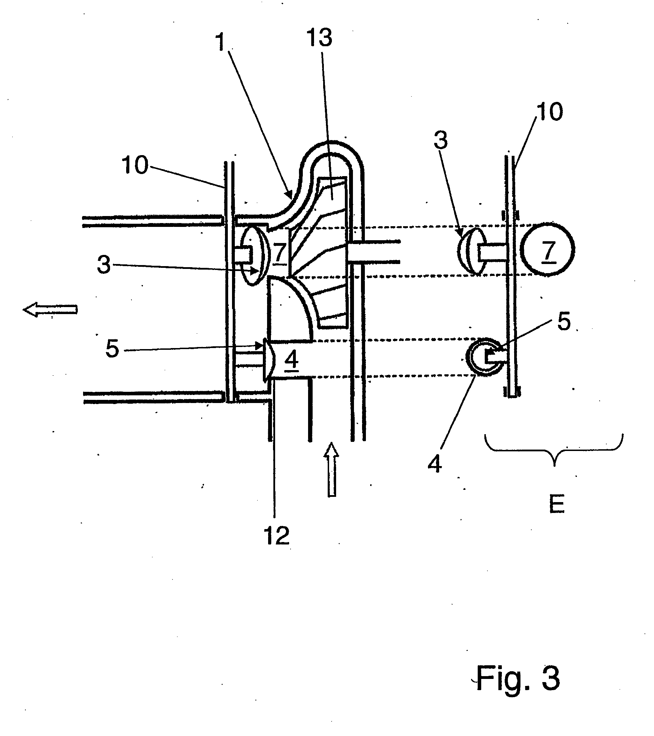

Fig. 3 zeigt eine Schnittdarstellung durch die Turbine gemäß Fig. 1 in einem dritten Betriebsmodus.

Fig. 3 zeigt wieder die Turbine 1 mit dem Turbinenrad 13, dem Turbinenauslass 7 und dem Wastegate-Ventil 4. Weiterhin zeigt Fig. 3 die Wastegate-Spindel 10 mit der Turbinenklappe 3 und der Wastegate-Klappe 5. Zur vereinfachten Darstellung sind in Fig. 3 die Motorsteuerung und das Stellmittel ebenfalls nicht gezeigt. Der gewünschte Drehwinkel und damit die Position der Welle 10 ist jedoch wieder über das Stellmittel anfahrbar.

In dem dritten Betriebsmodus der Turbine 1 befindet sich die Welle 10 in einer Endposition E. Die Endposition E stellt eine Anschlagposition dar, bei der die Wastegate-Klappe 5 gegen den Sitz des Wastegate-Ventils 4 trifft, die Wastegate-Klappe 5 wird dabei fest an einen Ventilsitz 12 des Wastegate-Ventils 4 angedrückt um Abgasleckagen möglichst klein zu halten. In dem dritten Betriebsmodus ist das Wastegate-Ventil 4 folglich vollständig geschlossen und der Turbinenaustritt 7 vollständig geöffnet, wodurch das gesamte Abgas durch die Turbine 1 geleitet wird und von dem Turbinenrad 13 zur Erzeugung von Rotationsenergie expandiert wird.

Der dritte Betriebsmodus ist erforderlich bei Volllastbetrieb des Verbrennungsmotors bei niedrigen Drehzahlen. Beispielsweise beim Anfahren eines Kraftfahrzeuges. Hier ist es erforderlich, dass der gesamte Abgasstrom vom Turbinenrad 13 expandiert wird und kein Abgas an der Turbine 1 durch das Wastegate-Ventil 4 vorbeifließt.

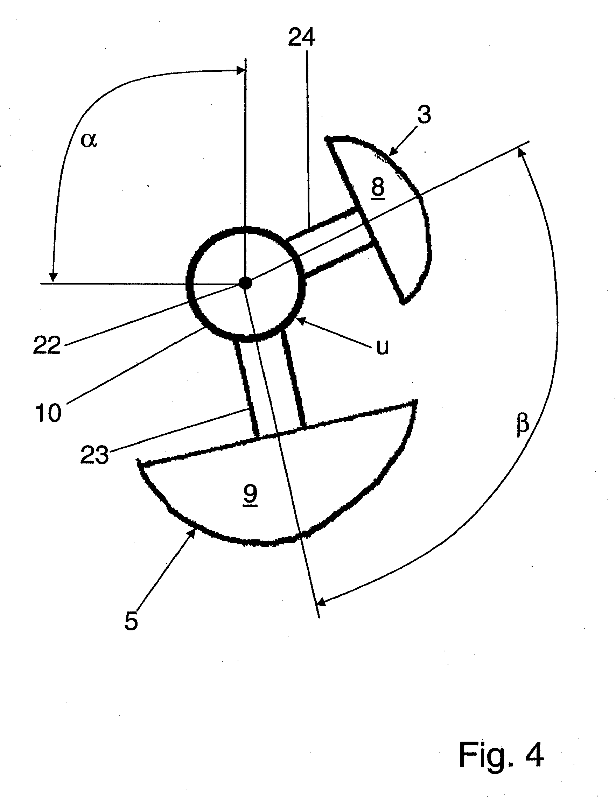

Fig. 4 zeigt eine Aufsicht auf eine bevorzugte Ausgestaltung einer Wastegate-Spindel der Turbine gemäß Fig. 1.

Fig. 4 zeigt die Wastegate-Spindel 10 in einer Aufsicht auf eine Ebene senkrecht zur Papierebene der Fig. 1. Fig. 4 illustriert die Welle 10 mit einer Drehachse 22, die Turbinenklappe 3 mit dem Ventilkörper 8 und einem Steg 24, der den Ventilkörper 8 mit der Welle 10 verbindet, sowie die Wastegate-Klappe 5 mit dem Ventilköper 9 und einem Steg 23, welcher den Ventilkörper 9 mit der Welle 10 verbindet. Die Verbindung zwischen den Ventilkörpern 8, 9 und den Stegen 24, 23 ist stoff-, form-, oder kraftschlüssig ausgebildet. Weiterhin zeigt Fig. 4 einen Drehwinkel α der Welle 10 und einen Winkel β, welcher die Winkelstellung der Stege 23 und 24 auf einem Umfang u der Welle 10 zueinander beschreibt. Die Stege 23 und 24 sind mit der Welle 10 bevorzugt drehfest verbunden. Beispielsweise über eine kraftflüssige Verbindung wie eine Klemmverbindung, eine formschlüssige Verbindung, wie beispielsweise eine Keilwellenverbindung oder eine stoffschlüssige Verbindung, wie beispielsweise einer Löt- oder Schweißverbindung. Die Stege 23 und 24 sind bezüglich des Umfangs u zueinander um den Winkel β versetzt. Bei der Drehung der Welle 10 um ihre Drehachse 22 bewegt diese sich um einen Drehwinkel α.

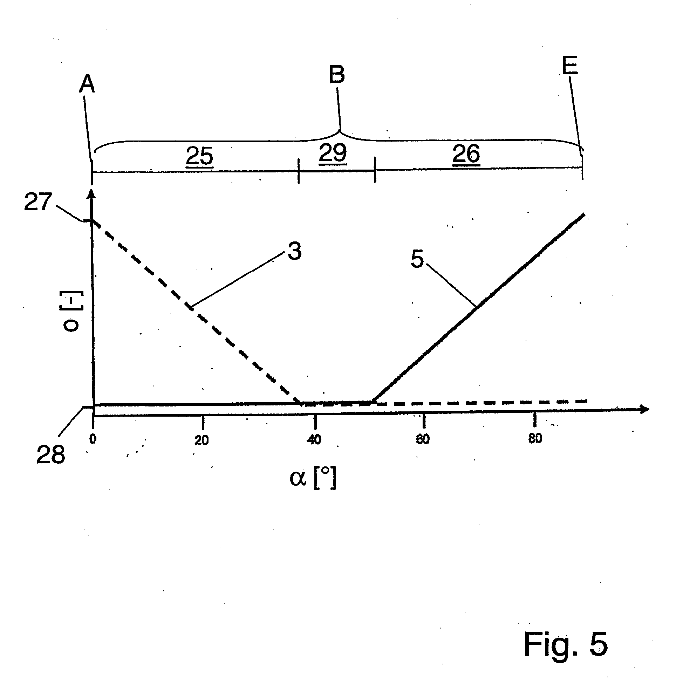

Fig. 5 zeigt eine Darstellung eines Öffnungsgrades eines Turbinenauslasses und eines Wastegate-Ventils in Abhängigkeit von einem Drehwinkel der Wastegate-Spindel gemäß Fig. 4.

Fig. 5 zeigt zunächst ein Diagramm, wobei auf der X-Achse des Diagramms der Drehwinkel α der Wastegate-Spindel und auf der Y-Achse des Diagramms ein Öffnungsgrad o der Turbinenklappe 3 bzw. der Wastegate-Klappe 5 angetragen ist. Weiterhin illustriert Fig. 5 die drei Positionen A, B und E der Wastegate-Spindel, einen Bereich 25, in welchem der Turbinenauslass öffnet sowie einen Bereich 26, in welchem das Wastegate-Ventil schließt. Das Bezugszeichen 27 bezeichnet in Fig. 5 eine vollständig geschlossene Turbinenklappe 3 bzw. eine vollständig geschlossene Wastegate-Klappe 5 und das Bezugszeichen 28 bezeichnet eine vollständig geöffnete Turbinenklappe 3 bzw. eine vollständig geöffnete Wastegate-Klappe 5. Das Bezugszeichen 29 bezeichnet einen Winkelbereich des Drehwinkels α, bei dem sowohl das Wastegate-Ventil 5 als auch die Turbinenklappe 3 vollständig geöffnet sind.

In der Position A der Wastegate-Spindel, welche dem ersten Betriebsmodus eines Abgasturboladers mit einer erfindungsgemäßen Turbine entspricht, ist zunächst die Turbinenklappe 3 vollständig geschlossen und die Wastegate-Klappe 5 vollständig geöffnet. Bei einer Drehung der Wastegate-Spindel um den Winkel α beginnt sich die Turbinenklappe 3 in dem Bereich 25 zunehmend zu öffnen und die Wastegate-Klappe 5 bleibt in diesem Bereich 25 zunächst vollständig geöffnet. Bevorzugt besteht ein linearer Zusammenhang zwischen dem Öffnungsgrad o der Turbinenklappe 3 und dem Drehwinkel α. In dem Bereich 29, der beispielsweise einen Winkelbereich des Drehwinkels α von etwa 40° bis 50° umfasst, sind sowohl die Wastegate-Klappe 5 als auch die Turbinenklappe 3 vollständig geöffnet. Bei einer weiteren Drehung der Wastegate-Spindel beginnt sich im Bereich 26 das Wastegate-Ventil zunehmend zu schließen, während die Turbinenklappe 3 weiterhin vollständig geöffnet bleibt. Der Zusammenhang zwischen dem Öffnungsgrad o der Wastegate-Klappe 5 und dem Drehwinkel α ist bevorzugt linear. Die Position B der Wastegate-Spindel entspricht dem zweiten Betriebsmodus des Abgasturboladers. Im Gegensatz zur Position A, welche beispielsweise einem Drehwinkel α von 0° entspricht, überdeckt die Position B der Wastegate-Spindel einen Winkelbereich des Drehwinkels α von beispielsweise 0° bis 90°. In der Endstellung E der Wastegate-Spindel, welche dem dritten Betriebsmodus des Abgasturboladers entspricht, ist die Turbinenklappe 3 schließlich vollständig geöffnet und die Wastegate-Klappe 5 vollständig geschlossen. Sobald das Wastegate-Ventil vollständig geschlossen ist, stoppt die Drehbewegung der Wastegate-Spindel, da der Ventilkörper der Wastegate-Klappe 5 gegen den Ventilsitz des Wastegate-Ventils trifft. Um Abgasleckagen bei Volllastbetrieb des Verbrennungsmotors bei niedrigen Drehzahlen möglichst klein zu halten, muss hier der Ventilkörper der Wastegate-Klappe 5 fest und bevorzugt formschlüssig gegen den Ventilsitz des Wastegate-Ventils gedrückt werden.

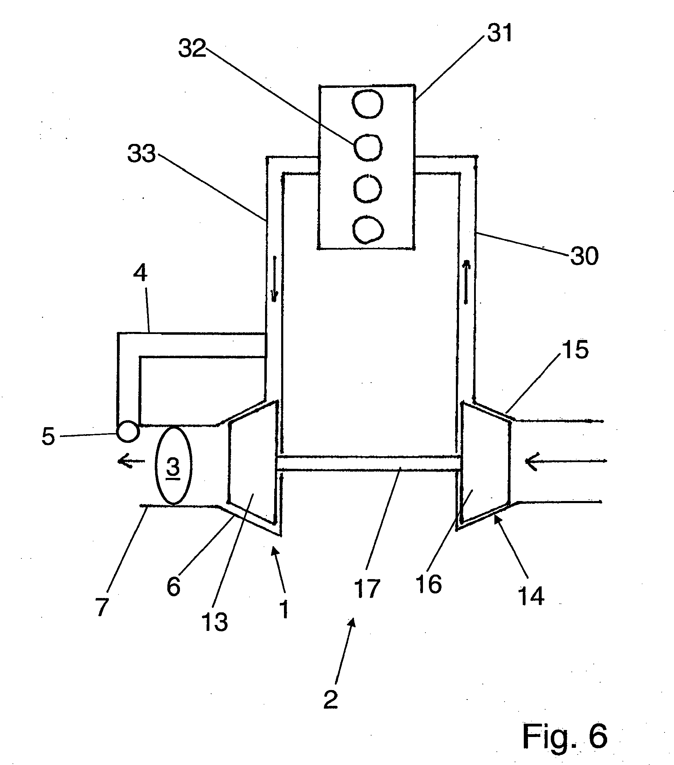

Fig. 6 zeigt eine Aufsicht auf eine bevorzugte Ausführungsform eines erfindungsgemäßen Abgasturboladers mit einer Turbine gemäß Fig. 1.

Ein Verbrennungsmotor 31 mit mehreren Zylindern 32 ist über eine Abgasleitung 33 fluidisch mit dem im Turbinengehäuse 6 angeordneten Turbinenrad 13 der Turbine 1 gekoppelt. Die Turbinenklappe 3 ist in dem Turbinenauslass 7 der Turbine 1 angeordnet. Das Wastegate-Ventil 4 mit der Wastegate-Klappe 5 stellt für das Abgas einen Bypass um die Turbine 1 dar. Das Turbinenrad 13 ist über eine Turboladerwelle 17 mit einem Verdichterrad 16 drehfest verbunden. Das Verdichterrad 16 ist in einem Verdichtergehäuse 15 eines Verdichters 14 eines Abgasturboladers 2 angeordnet. Das Verdichterrad 16 ist über einen Ansaugtrakt 30 mit dem Verbrennungsmotor 31 fluidisch gekoppelt.

Im Betrieb des Verbrennungsmotors 31 mit dem Abgasturbolader 2 stellt der Verbrennungsmotor 31 über die Abgasleitung 33 dem Turbinenrad 13 Abgas zur Verfügung. Durch das Turbinenrad 13 wird die Enthalpie des Abgases erniedrigt und die kinetische und thermische Energie des Abgases wird in Rotationsenergie umgewandelt. Die Rotationsenergie wird über die Turboladerwelle 17 auf das Verdichterrad 16 übertragen. Das Verdichterrad 16 saugt Frischluft an, komprimiert diese und führt die komprimierte Frischluft über den Ansaugtragt 30 dem Verbrennungsmotor 31 zu. Dadurch, dass in dem komprimierten Luftvolumen pro Volumeneinheit mehr Sauerstoff vorhanden ist, kann im Verbrennungsmotor 31 pro Luftvolumeneinheit mehr Kraftstoff verbrannt werden, wodurch sich die Leistungsausbeute des Verbrennungsmotors 31 erhöht. Je nach Betriebszustand des Verbrennungsmotors 31 kann über das Wastegate-Ventil 4 Abgas an der Turbine 1 vorbeigeleitet werden, bzw. kann der Turbinenauslass 7 mittels der Turbinenklappe 3 verschlossen werden.

In einem ersten Betriebsmodus des erfindungsgemäßen Abgasturboladers 2 ist der Turbinenauslass 7 vollständig geschlossen und die Wastegate-Klappe 5 vollständig geöffnet, d. h. das gesamte Abgas wird um die Turbine 1 herumgeleitet. Dieser Betriebsmodus ist erforderlich bei einem Starten des Verbrennungsmotors 31 um einen Katalysator möglichst schnell auf seine erforderliche Betriebstemperatur zu bringen.

In einem zweiten Betriebsmodus des erfindungsgemäßen Abgasturboladers 2 sind sowohl die Turbinenklappe 3 als auch die Wastegate-Klappe 5 zumindest teilweise geöffnet. Dieser zweite Betriebsmodus wird beispielsweise bei einer schnellen konstanten Fahrt eines Kraftfahrzeugs bei hoher Drehzahl des Verbrennungsmotors 31 erreicht. Durch ein zumindest teilweises Öffnen der Wastegate-Klappe 5 wird verhindert, dass der Turbine 1 eine zu hohe Abgasmenge bei Volllast des Verbrennungsmotors 31 zugeführt wird, wodurch sich die Drehzahl des Turbinenrades 13 und damit die Drehzahl des Verdichterrades 16 soweit erhöhen könnte, dass entweder das Turbinenrad 13 oder gar der Verbrennungsmotor 31 durch zu starke Aufladung Schaden nehmen würden.

In einem dritten Betriebsmodus des erfindungsgemäßen Abgasturboladers 2 ist die Wastegate-Klappe 5 vollständig geschlossen und die Turbinenklappe 3 vollständig geöffnet. Dieser Betriebsmodus ist beispielsweise bei dem Anfahren des Kraftfahrzeuges erforderlich. Hierbei wird das gesamte Abgas durch die Turbine 1 geleitet, wodurch bereits bei niedrigen Drehzahlen und voller Motorlast eine ausreichende Motorleistung erreicht wird.

Obwohl die vorliegende Erfindung anhand bevorzugter Ausführungsbeispiele vollständig beschrieben wurde, ist sie darauf nicht beschränkt, sondern auf vielfältige Art und Weise modifizierbar. Insbesondere können Merkmale der einzelnen, oben aufgeführten Ausführungsbeispiele - sofern dies technisch sinnvoll ist - beliebig miteinander kombiniert werden.

In einer bevorzugten Modifikation der vorliegenden Erfindung wird die Turbinenklappe nicht an dem Turbinenauslass der Turbine, sondern an einem Turbineneinlass der Turbine angeordnet. Bei dieser konstruktiven Ausführung sind dann zwei Stellmittel erforderlich, wodurch sich allerdings die Öffnungsgrade der Turbinenklappe und der Wastegate-Klappe durch die fehlende mechanische Kopplung vollständig unabhängig voneinander bewegen lassen.

Die aufgeführten Materialien, Zahlenangaben und Dimensionen sind beispielhaft zu verstehen und dienen lediglich der Erläuterung der Ausführungsformen und Weiterbildungen der vorliegenden Erfindung.

Die angegebene Turbine und Abgasturbolader mit Turbine ist besonders vorteilhaft im Kraftfahrzeugbereich und hier vorzugsweise bei Personenkraftfahrzeugen, beispielsweise bei Diesel- oder Ottomotoren, einsetzbar, lässt sich bei Bedarf allerdings auch bei beliebig anderen Turboladeranwendungen mit Wastegate einsetzen.

## Patentansprüche

1. Turbine (1) für einen Abgasturbolader (2), insbesondere für ein Kraftfahrzeug,
- mit einem Turbinengehäuse (6),
- mit einer Turbinenklappe (3), welche eine die Turbine (1) durchströmende Abgasmenge steuert,
- mit einem Wastegate-Ventil (4), welches Abgas an der Turbine (1) vorbeileitet, und
- mit einer Wastegate-Klappe (5), welche eine das Wastegate-Ventil (4) durchströmende Abgasmenge steuert, wobei
- das Wategate-Ventil (4) als Durchbruch in dem Turbinengehäuse (6) vorgesehen ist,
- die Turbinenklappe (3) und die Wastegate-Klappe (5) in dem Turbinengehäuse (6) angeordnet sind und
- die Turbinenklappe (3) und die Wastegate-Klappe (5) auf einer Wastegate-Spindel (10) angeordnet sind und mit dieser drehfest verbunden sind.

2. Turbine nach Anspruch 1,
**dadurch gekennzeichnet,**
**dass** die Turbinenklappe (3) an einem Turbinenauslass (7) angeordnet ist.

3. Turbine nach einem der vorhergehenden Ansprüche,
**dadurch gekennzeichnet,**
**dass** die Turbinenklappe (3) und/oder die Wastegate-Klappe (5) abgerundete Ventilkörper (8,9) aufweisen.

4. Turbine nach einem der vorhergehenden Ansprüche,
**dadurch gekennzeichnet,**
**dass** ein Stellmittel (11) zur Drehung der Wastegate-Spindel (10) vorgesehen ist.

5. Turbine einem der vorhergehenden Ansprüche,
**dadurch gekennzeichnet,**
**dass** die Turbinenklappe (3) und die Wastegate-Klappe (5) in einer Längsrichtung (1) und einer Umfangsrichtung (u) der Wastegate-Spindel (10) versetzt zueinander angeordnet sind.

6. Turbine nach einem der vorhergehenden Ansprüche,
**dadurch gekennzeichnet,**
**dass** die Wastegate-Spindel (10) in eine erste Position (A) drehbar ist, in welcher der Turbinenauslass (7) vollständig geschlossen ist und in welcher das Wastegate-Ventil (4) vollständig geöffnet ist.

7. Turbine nach einem der vorhergehenden Ansprüche,
**dadurch gekennzeichnet,**
**dass** die Wastegate-Spindel (10) in eine zweite Position (B) drehbar ist, in welcher der Turbinenauslass (7) zumindest abschnittsweise geöffnet ist und in welcher das Wastegate-Ventil (4) ebenfalls zumindest abschnittsweise geöffnet ist.

8. Turbine nach einem der vorhergehenden Ansprüche,
**dadurch gekennzeichnet,**
**dass** die Wastegate-Spindel (10) in eine Endposition (E) drehbar ist, in welcher der Turbinenauslass (7) vollständig geöffnet ist und in welcher das Wastegate-Ventil (4) vollständig geschlossen ist, wobei die Wastegate-Klappe (5) zur Verhinderung von Abgasleckagen in der Endposition (E) gegen einen Ventilsitz (12) des Wastegate-Ventils (4) gedrückt ist.

9. Abgasturbolader (2), insbesondere für ein Kraftfahrzeug, mit einer Turbine (1) nach wenigstens einem der Ansprüche 1 bis 8, der aufweist:
- ein in einem Turbinengehäuse (6) angeordnetes Turbinenrad (13),
- einen Verdichter (14) mit einem Verdichtergehäuse (15),
- ein in dem Verdichtergehäuse (13) angeordnetes Verdichterrad (16), und
- eine Turboladerwelle (17), welche das Verdichterrad (16) mit dem Turbinenrad (13) drehfest verbindet.

10. Kraftfahrzeug mit einem Abgasturbolader (2) nach Anspruch 9.

11. Verfahren zum Betreiben eines Abgasturboladers (2), der eine Turbine (1) nach wenigstens einem der Ansprüche 1 bis 8 aufweist, mit einem ersten Betriebsmodus, bei dem die Turbinenklappe (3) vollständig geschlossen ist und bei dem die Wastegate-Klappe (5) vollständig geöffnet ist, wodurch die gesamte Abgasmenge durch das Wastegate-Ventil (4) strömt.

12. Verfahren nach Anspruch 11,
**dadurch gekennzeichnet,**
**dass** ein zweiter Betriebsmodus vorgesehen ist, bei dem die Turbinenklappe (3) und die Wastegate-Klappe (5) zumindest abschnittsweise geöffnet sind, wodurch die Abgasmenge teilweise durch die Turbine (1) und teilweise durch das Wastegate-Ventil (4) strömt.

13. Verfahren nach Anspruch 11 oder 12,
**dadurch gekennzeichnet,**
**dass** ein dritter Betriebsmodus vorgesehen ist, bei dem die Turbinenklappe (3) vollständig geöffnet ist und bei dem die Wastegate-Klappe (5) vollständig geschlossen ist, wodurch die gesamte Abgasmenge durch die Turbine (1) strömt.

## Claims

1. Turbine (1) for an exhaust turbocharger (2), in particular for a motor vehicle,
- having a turbine housing (6),
- having a turbine flap (3), which controls a quantity of exhaust gas flowing through the turbine (1),
- having a waste gate valve (4), which directs exhaust gas past the turbine (1) and
- having a waste gate flap (5), which controls a quantity of exhaust gas flowing through the waste gate valve (4), wherein
- the waste gate valve (4) is provided as an aperture in the turbine housing (6),
- the turbine flap (3) and the waste gate flap (5) are arranged in the turbine housing (6), and
- the turbine flap (3) and the waste gate flap (5) are arranged on a waste gate spindle (10) and are connected thereto for conjoint rotation.

2. Turbine according to Claim 1, **characterized in that** the turbine flap (3) is arranged at a turbine outlet (7).

3. Turbine according to one of the preceding claims, **characterized in that** the turbine flap (3) and/or the waste gate flap (5) have rounded valve elements (8, 9).

4. Turbine according to one of the preceding claims, **characterized in that** an actuating means (11) is provided for rotating the waste gate spindle (10).

5. Turbine according to one of the preceding claims, **characterized in that** the turbine flap (3) and the waste gate flap (5) are arranged offset relative to one another in a longitudinal direction (1) and a circumferential direction (u) of the waste gate spindle (10).

6. Turbine according to one of the preceding claims, **characterized in that** the waste gate spindle (10) can be rotated into a first position (A), in which the turbine outlet (7) is completely closed and in which the waste gate valve (4) is completely opened.

7. Turbine according to one of the preceding claims, **characterized in that** the waste gate spindle (10) can be rotated into a second position (B), in which the turbine outlet (7) is at least partially opened and in which the waste gate valve (4) is likewise at least partially opened.

8. Turbine according to one of the preceding claims, **characterized in that** the waste gate spindle (10) can be rotated into an end position (E), in which the turbine outlet (7) is completely opened and in which the waste gate valve (4) is completely closed, wherein the waste gate flap (5) is pressed against a valve seat (12) of the waste gate valve (4) to prevent leaks of exhaust gas in the end position (E).

9. Exhaust turbocharger (2), in particular for a motor vehicle, having a turbine (1) according to at least one of Claims 1 to 8, which has:
- a turbine rotor (13) arranged in a turbine housing (6),
- a compressor (14) having a compressor housing (15),
- a compressor impeller (16) arranged in the compressor housing (15), and
- a turbocharger shaft (17), which connects the compressor impeller (16) to the turbine rotor (13) for conjoint rotation.

10. Motor vehicle having an exhaust turbocharger (2) according to Claim 9.

11. Method for operating an exhaust turbocharger (2) which has a turbine (1) according to at least one of Claims 1 to 8, having a first operating mode, in which the turbine flap (3) is completely closed and in which the waste gate flap (5) is completely opened, with the result that the entire quantity of exhaust gas flows through the waste gate valve (4).

12. Method according to Claim 11, **characterized in that** a second operating mode is provided, in which the turbine flap (3) and the waste gate flap (5) are at least partially opened, with the result that the quantity of exhaust gas flows partially through the turbine (1) and partially through the waste gate valve (4).

13. Method according to Claim 11 or 12, **characterized in that** a third operating mode is provided, in which the turbine flap (3) is completely opened and in which the waste gate flap (5) is completely closed, with the result that the entire quantity of exhaust gas flows through the turbine (1).

## Revendications

1. Turbine (1) pour un turbocompresseur à gaz (2), en particulier pour un véhicule automobile,
- comportant un carter de turbine (6),
- comportant un clapet de turbine (3), qui commande une quantité de gaz d'échappement circulant à travers la turbine (1),
- comportant une soupape de décharge (4) qui fait passer les gaz d'échappement au niveau de la turbine (1), et
- comportant un clapet de décharge (5), qui commande une quantité de gaz d'échappement circulant à travers la soupape de décharge (4),
- la soupape de décharge (4) étant prévue sous la forme d'un passage dans le carter de turbine (6),
- le clapet de turbine (3) et le clapet de décharge (5) étant disposés dans le carter de turbine (6), et
- le clapet de turbine (3) et le clapet de décharge (5) sont disposés sur une broche de décharge (10) et reliés de manière immobile en rotation avec celle-ci.

2. Turbine selon la revendication 1, **caractérisée en ce que** le clapet de turbine (3) est disposé au niveau d'une sortie de turbine (7).

3. Turbine selon l'une quelconque des revendications précédentes, **caractérisée en ce que** le clapet de turbine (3) et/ou le clapet de décharge (5) présentent des corps de soupape (8, 9) arrondis.

4. Turbine selon l'une quelconque des revendications précédentes, **caractérisée en ce qu'**un moyen de réglage (11) est prévu pour la rotation de la broche de décharge (10).

5. Turbine selon l'une quelconque des revendications précédentes, **caractérisée en ce que** le clapet de turbine (3) et le clapet de décharge (5) sont disposés en étant décalés l'un par rapport à l'autre suivant une direction longitudinale (1) et suivant une direction circonférentielle (u) de la broche de décharge (10).

6. Turbine selon l'une quelconque des revendications précédentes, **caractérisée en ce que** la broche de décharge (10) peut tourner dans une première position (A), dans laquelle la sortie de turbine (7) est complètement fermée et dans laquelle la soupape de décharge (4) est complètement ouverte.

7. Turbine selon l'une quelconque des revendications précédentes, **caractérisée en ce que** la broche de décharge (10) peut tourner suivant une deuxième position (B), dans laquelle la sortie de turbine (7) est ouverte au moins par sections et dans laquelle la soupape de décharge (4) est également ouverte au moins par sections.

8. Turbine selon l'une quelconque des revendications précédentes, **caractérisée en ce que** la broche de décharge (10) peut tourner dans une position finale (E), dans laquelle la sortie de turbine (7) est complètement ouverte et dans laquelle la soupape de décharge (4) est complètement fermée, le clapet de décharge (5) étant poussé contre un siège de soupape (12) de la soupape de décharge (4) pour empêcher des fuites des gaz d'échappement dans la position finale (E).

9. Turbocompresseur à gaz (2), en particulier pour un véhicule automobile, comportant une turbine (1) selon au moins l'une quelconque des revendications 1 à 8, qui comprend :
- une roue de turbine (13) disposée dans un carter de turbine (6),
- un compresseur (14) comportant un carter de compresseur (15),
- une roue de compresseur (16), disposée dans le carter du compresseur (15), et
- un arbre de turbocompresseur (17), qui relie de manière immobile en rotation la roue de compresseur (16) et la roue de turbine (13).

10. Véhicule automobile comportant un turbocompresseur à gaz (2) selon la revendication 9.

11. Procédé permettant le fonctionnement d'un turbocompresseur à gaz (2) qui présente une turbine (1) selon au moins l'une quelconque des revendications 1 à 8, comportant un premier mode de fonctionnement, dans lequel le clapet de turbine (3) est complètement fermé et dans lequel le clapet de décharge (5) est complètement ouvert, moyennant quoi toute la quantité de gaz d'échappement afflue à travers la soupape de décharge (4).

12. Procédé selon la revendication 11, **caractérisé en ce qu'**un deuxième mode de fonctionnement est prévu, dans lequel le clapet de turbine (3) et le clapet de décharge (5) sont ouverts au moins par sections, moyennant quoi la quantité de gaz d'échappement afflue en partie à travers la turbine (1) et en partie à travers la soupape de décharge (4).

13. Procédé selon la revendication 11 ou 12, **caractérisé en ce qu'**un troisième mode de fonctionnement est prévu, dans lequel le clapet de turbine (3) est complètement ouvert et dans lequel le clapet de décharge (5) est complètement fermé, moyennant quoi toute la quantité de gaz d'échappement afflue à travers la turbine (1).
